# EUROPÄISCHE PATENTSCHRIFT

(11) **EP 1 576 307 B1**
(45) Veröffentlichungstag und Bekanntmachung des Hinweises auf die Patenterteilung: **29.03.2006**
(21) Anmeldenummer: 03813915.0
(22) Anmeldetag: 24.12.2003
(51) Int. Cl.: F16K 11/072, F16K 11/078

(54) **SANITÄRE AUSLAUFARMATUR**
SANITARY OUTFLOW FITTING
ROBINETTERIE SANITAIRE D'ECOULEMENT

(30) Priorität: 27.12.2002 DE 10261266
(43) Veröffentlichungstag der Anmeldung: 21.09.2005
(73) Patentinhaber: HANSA METALLWERKE AG, 70567 Stuttgart (DE)
(72) Erfinder: GÄNZLE, Fritz, 70563 Stuttgart (DE); STARK, Rainer, 73765 Neuhausen (DE)
(74) Vertreter: Ostertag, Ulrich
(86) Internationale Anmeldenummer: PCT/EP2003/014914
(87) Internationale Veröffentlichungsnummer: WO 2004/059197

(56) Entgegenhaltungen:
- WO-A-96/29530
- DE-A- 19 844 627
- FR-A- 2 438 217
- US-A- 3 726 316
- US-A- 5 755 258

## Beschreibung

Die Erfindung betrifft eine sanitäre Auslaufarmatur, insbesondere einen Einhebelmischer, wie im Oberbegriff des Anspruchs beschrieben ist.

Eine solche Auslaufarmatur ist in WO 96/29530 offenbart. Sanitäre Auslaufarmaturen sind in unzähligen Varianten seit über zwanzig Jahren bekannt und auf dem Markt weit verbreitet. Bevorzugt finden bei diesen sanitären Auslaufarmaturen Steuerkartuschen Verwendung, wie sie in der DE 27 39 587 C3 beschrieben sind. Diese Steuerkartuschen besitzen alle Anschlußöffnungen an der Unterseite ihres Bodens, was die dichte Verbindung der Steuerkartusche mit dem Armaturengehäuse erleichtert. Das aus der Steuerkartusche ausfließende Wasser wird dann über einen gewissen Weg im Boden des Armaturengehäuses geführt und gelangt von dort zum Auslauf. Diese Konstruktionsprinzip eignet sich besonders dort, wo der Auslauf verhältnismäßig tief an das Armaturengehäuse angesetzt ist, so daß zwischen dem Durchströmungsraum im Boden des Armaturengehäuses und dem Auslauf leicht eine Kommunikation hergestellt werden kann.

In jüngster Zeit wächst der Wunsch, bei der Gestaltung von Sanitärarmaturen neue Akzente zu setzen. Insbesondere werden auch sanitäre Auslaufarmaturen gewünscht, bei denen sich der Auslauf im oberen oder gar obersten Bereich befindet. Hier bereitet es Schwierigkeiten, das nach unten aus der Steuerkartusche austretende Wasser zum Auslauf zu bringen. Grundsätzlich wäre es möglich, zur Lösung dieses Problems die Auslauföffnung der Steuerkartusche nicht in deren Boden sondern im oberen Bereich vorzusehen. Hier ergeben sich jedoch einerseits Probleme mit der dichten Überleitung des Wassers zu den entsprechenden Durchströmungsräumen im Armaturengehäuse und andererseits werden spezielle Steuerkartuschen für diese Einsatzzwecke benötigt. Der Wunsch der Sanitärarmaturenhersteller und Sanitärinstallateure geht jedoch dahin, die Anzahl von Baukomponenten so klein wie möglich zu halten.

Aufgabe der vorliegenden Erfindung ist es, eine sanitäre Auslaufarmatur der eingangs genannten Art so auszugestalten, daß bei Verwendung der herkömmlichen Steuerkartuschen mit geringem Aufwand ein Wasserfluß auch zu Ausläufen ermöglicht werden kann, die im oberen oder obersten Bereich der sanitären Auslaufarmatur liegen.

Diese Aufgabe wird erfindungsgemäß dadurch gelöst, daß der Aufnahmeeinsatz
eine weitere Durchgangsöffnung aufweist, die an ihrem einen Ende mit der Auslauföffnung der Steuerkartusche und an ihrem anderen Ende mit einem zwischen dem Aufnahmeeinsatz und dem Armaturengehäuse vorgesehenen Wasserverteilraum kommuniziert, der seinerseits zum radial außen liegenden Bereich des Innenraumes des Armaturengehäuses führt.

Erfindungsgemäß wird also die Steuerkartusche nicht direkt in den Innenraum des Armaturengehäuses sondern in einen gesonderten Aufnahmeeinsatz eingebaut, der gewissermaßen als "Adapter" zwischen dem Armaturengehäuse und der Steuerkartusche liegt. Zwischen diesem Aufnahmeeinsatz und dem Boden sowie der Mantelfläche des Innenraumes des Armaturengehäuses lassen sich nunmehr diejenigen Strömungswege schaffen, die zur Umleitung des aus der Steuerkartusche nach unten austretenden Wassers in Richtung nach oben zum Auslauf erforderlich sind. Der Aufnahmeeinsatz wird dabei vom Wasser zumindest bereichsweise umströmt.

Zweckmäßig ist, wenn zwischen der Mantelfläche des Aufnahmeeinsatzes und der Mantelfläche des Innenraumes des Armaturengehäuses ein Distanzring vorgesehen ist, der den Aufnahmeeinsatz positioniert und Ausnehmungen ausweist, die von Wasser durchströmt werden können. Diese Ausgestaltung wird insbesondere dort eingesetzt, wo der Durchströmungsraum zwischen dem Aufnahmeeinsatz und der Mantelfläche des Innenraumes des Armaturengehäuses ringförmig sein soll. Der Distanzring hält dann in radialer Richtung den Aufnahmeeinsatz so, daß sich um seine ganze Mantelfläche herum ein spaltartiger Durchströmungsraum mit konstanter Dicke ergibt.

Bei einer bevorzugten Ausführungsform der Erfindung ist in der mit der Auslauföffnung der Steuerkartusche kommunizierenden Durchgangsbohrung des Aufnahmeeinsatzes eine Drossel angeordnet, welche die Menge des pro Zeiteinheit durchströmenden Wassers auf einen Maximalwert begrenzt. Mit dieser Ausgestaltung wird erreicht, daß sich bei voll geöffneter Steuerkartusche das Strahlbild des aus dem Auslauf austretenden Wassers nicht mehr ändert, wenn in der Hausleitung, an welche die Auslaufarmatur angeschlossen ist, Veränderungen des Wasserdruckes auftreten.

Die erfindungsgemäße Konstruktion der sanitären Auslaufarmatur eignet sich besonders dafür, daß der Auslauf die Form einer Schale besitzt, die auf der Oberseite der sanitären Auslaufarmatur angeordnet ist. Mit einem solchen schalenartigen Auslauf wird nicht nur ein besonderer ästhetischer Effekt erzielt; der von diesem Auslauf fließende Wasservorhang wird von vielen Benutzern auch als besonders komfortabel und angenehm empfunden.

Dabei wiederum ist es zweckmäßig, wenn die Schale so geneigt ist, daß das Wasser bevorzugt über einen begrenzten Winkelbereich ihres Randes abläuft. Der Wasservorhang erhält auf diese Weise quer zur Strömungsrichtung diejenige Ausdehnung, die im Einzelfall gewünscht ist.

Die Schale kann eine Durchströmungsöffnung aufweisen, durch welche das Wasser von unten auf die Oberseite der Schale fließt. Die Schale wird also nicht von einer Seite her sondern von einer innen liegenden Öffnung her gespeist, was erneut zu einem ästhetisch besonders attraktiven Strahlbild führt.

Handelt es sich bei der sanitären Auslaufarmatur um einen Einhebelmischer, so kommt besonders eine Ausführungsform der Erfindung in Frage, bei welcher sich durch die Schale ein Betätigungsmechanismus für die Steuerkartusche hindurch erstreckt und der Bedienungshebel nach oben aus der Schale herausragt. Dieser Einhebelmischer kann also grundsätzlich in bekannter Weise bedient werden, obwohl die als Auslauf dienende Schale - abgesehen vom Bedienungshebel - das oberste Bauelement ist.

Ein Ausführungsbeispiel der Erfindung wird nachfolgend anhand der Zeichnung näher erläutert; es zeigen
- Figur 1: einen Axialschnitt durch eine Waschtischarmatur;
- Figur 2: einen Schnitt durch die Waschtischarmatur von Figur 1 gemäß der dortigen Linie II-II;
- Figur 3: perspektivisch die Draufsicht auf das Hauptteil des Armaturengehäuse der Waschtischarmatur der Figuren 1 und 2;
- Figur 4: perspektivisch die Unteransicht eines Aufnahmeeinsatzes der Waschtischarmatur der Figuren 1 und 2;

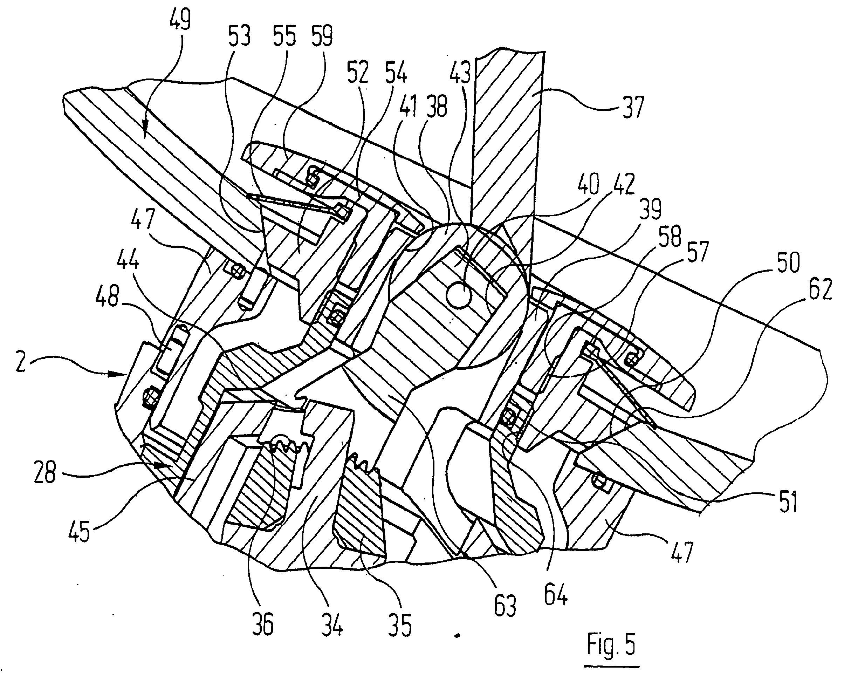

- Figur 5: eine Ausschnittvergrößerung aus Figur 1;
- Figur 6: einen Schnitt durch eine Membran, die bei der Waschtischarmatur der Figuren 1 und 2 Verwendung findet;
- Figur 7: schematisch das Wasserstrahlbild, das bei der Waschtischarmatur der Figuren 1 und 2 erhalten wird.

Die in der Zeichnung dargestellte Waschtischarmatur, die insgesamt das Bezugszeichen 1 trägt, umfasst ein Armaturengehäuse 2, das aus einem becherförmigen, nach oben offenen Hauptteil 2a und einem auf diesen aufgesetzten Distanzring 2b besteht. Der Hauptteil 2a wird unten von einer Standfläche 3 begrenzt, die unter einem schrägen Winkel zur Gehäuseachse steht. In montiertem Zustand liegt die Standfläche 3 an einer entsprechenden horizontalen Waschtischfläche an, so daß die Achse des Gehäuses 2, wie dargestellt, gegenüber der Horizontalen unter einem von 90° abweichenden Winkel verläuft.

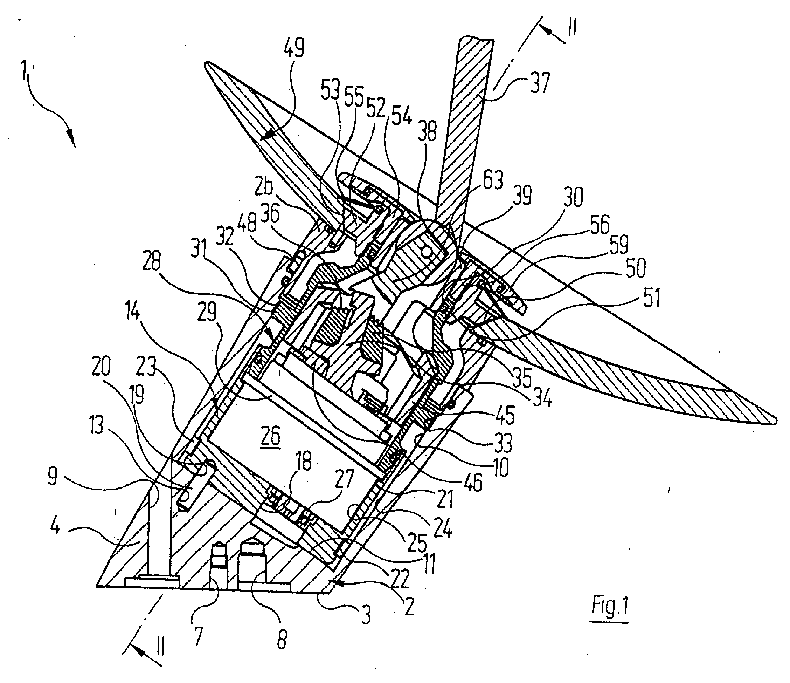

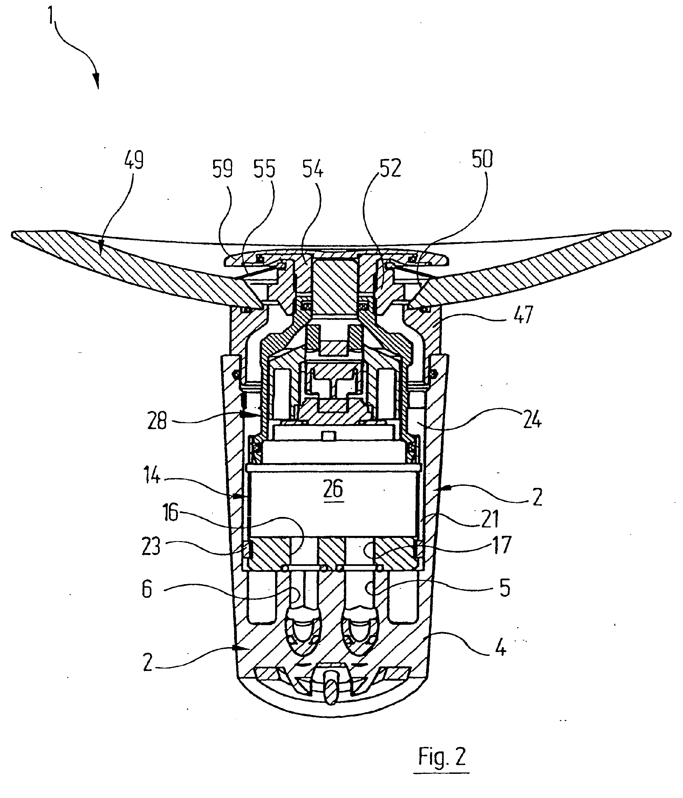

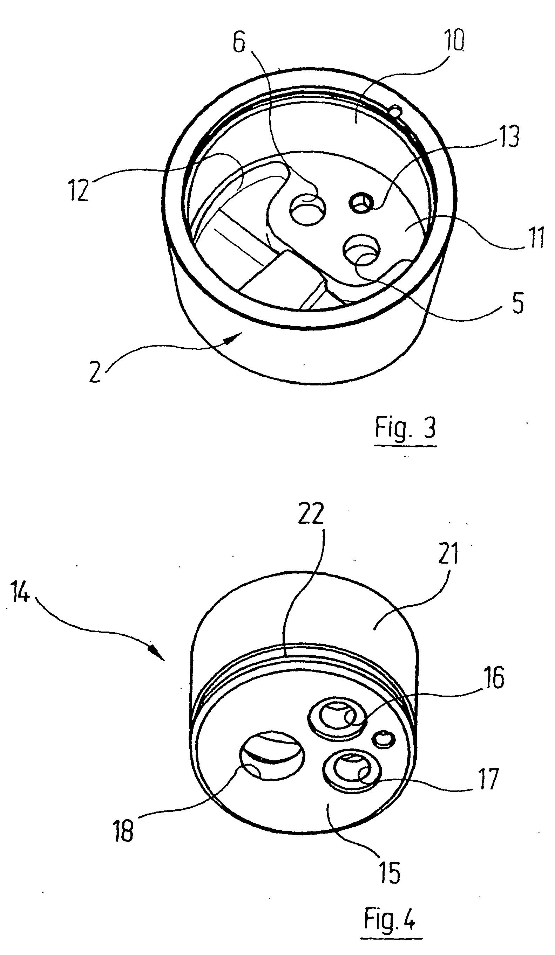

Wie insbesondere den Figuren 2 und 3 zu entnehmen ist, wird der Boden 4 des Gehäuses 2, an dem die Standfläche 3 ausgebildet ist, von zwei spiegelsymmetrisch zur Schnittebene der Figur 1 angeordneten Durchgangsbohrungen 5, 6 durchsetzt, in welchen nicht dargestellte Zulaufrohre für Warm- und Kaltwasser befestigt werden können. Dieser Befestigung dient eine Sack-Gewindebohrung 7, die etwa in der Mitte der Standfläche 3, vertikal zu dieser, in den Boden 4 des Gehäuses 2 eingebracht ist. In einer weiteren, parallel zur Sack-Gewindebohrung 7 von der Standfläche 3 her in den Boden 4 eingeführten Sack-Gewindebohrung 8 lässt sich eine Befestigungsstange einschrauben, die in der Zeichnung nicht dargestellt ist und in üblicher Weise der Befestigung der Waschtischarmatur 1 am Waschtisch dient. Schließlich wird der Boden 4 des Gehäuses 2 von einer außermittigen Durchgangsbohrung 9 durchsetzt, die oben allerdings nicht in den Innenraum des Gehäuses 2 sondern an der Außenmantelfläche des Gehäuses 2 mündet. Sie dient der Durchführung einer nicht dargestellten Betätigungsstange für das Ablaufventil des Waschtisches, an dem die Waschtischarmatur 1 montiert ist.

Figur 3 zeigt einen Einblick in den Innenraum des Hauptteiles 2a Gehäuses 2, von oben gesehen. Dort sind die Mündungen der wasserführenden Durchgangsbohrungen 5, 6 zu erkennen. Eine etwa C-förmige Vertiefung 12 ist in die Bodenfläche 11 eingearbeitet, welche die ganze, den Durchgangsbohrungen 5 und 6 gegenüberliegende Hälfte dieser Bodenfläche 11 sowie zwei in die Hälfte der Durchgangsbohrungen 5, 6 hineinreichende und diese teilweise umgebende Bereiche umfasst. In der Symmetrieebene ist in die Bodenfläche 11 außerdem eine einfache Sackbohrung 13 eingearbeitet, deren Zweck weiter unten deutlich wird.

In den Innenraum 10 des Hauptteiles 2a des Gehäuses 2 ist von oben her ein Aufnahmeeinsatz 14 eingestellt, der ebenfalls die Form eines nach oben offenen Bechers besitzt.

Der Boden 15 des Aufnahmeeinsatzes 14 wird von zwei symmetrischen, außermittig liegenden Durchgangsbohrungen 16, 17 durchsetzt, die in montiertem Zustand mit den Durchgangsbohrungen 5 und 6 im Gehäuse 2 fluchten. Diese Durchgangsbohrungen 16, 17 sind in den Figuren 2 und 4 erkennbar. Der Zweck einer weiteren, großflächigen Durchgangsbohrung 18, die den beiden Durchgangsbohrungen 16, 17 gegenüberliegend in der Symmetrieebene des Aufnahmeeinsatzes 14 vorgesehen ist, wird ebenfalls erst weiter unten deutlich. Schließlich ist in den Boden 15 des Aufnahmeeinsatzes 14 von unten her eine Sackbohrung 19 eingearbeitet, die in montiertem Zustand mit der Sackbohrung 13 im Boden 4 des Gehäuses 2 fluchtet. Ein in die beiden Sackbohrungen 13, 19 eingesetzter Stift 20 sorgt für die richtige Orientierung des Aufnahmeeinsatzes 14 gegenüber dem Boden 4 des Gehäuses 2.

In die Mantelfläche 21 des Aufnahmeeinsatzes 14 ist im unteren, der Bodenfläche 15 benachbarten Bereich eine Ringnut 22 eingeformt, in welcher ein Distanzring 23 einliegt. Wie Figur 1 zeigt, hat der Distanzring 23 einen Außendurchmesser, der dem Durchmesser des Innenraumes 10 des Hauptteiles 2a des Gehäuses 2 entspricht. Der Distanzring 23 zentriert daher den Aufnahmeeinsatz 14 innerhalb des Gehäuses 2 so, daß zwischen der Mantelfläche des Innenraumes 10 und der Mantelfläche 21 des Aufnahmeeinsatzes 14 ein ringförmiger Durchströmungsraum 24 verbleibt. Der Distanzring 23 besitzt an seiner Außenmantelfläche eine Vielzahl achsparalleler Nuten oder Kerben, die von Wasser durchströmt werden können. Diese sind in der Zeichnung nicht erkennbar.

In den Innenraum 25 des Aufnahmeeinsatzes 14 ist von oben her eine an und für sich bekannte Steuerkartusche eingesetzt, die insgesamt das Bezugszeichen 26 trägt. Die Steuerkartusche 26 enthält Steuerscheiben, im allgemeinen aus Keramik, von denen eine feststehend und die andere gegenüber der feststehenden beweglich ist. Durch eine kombinierte rotatorische und/oder translatorische Bewegung der beweglichen Steuerscheibe läßt sich der Durchfluß des warmen und des kalten Wassers durch die Steuerkartusche 26 so steuern, daß das aus ihr austretende Wasser in seiner Temperatur und Menge bestimmt werden kann. Die Steuerkartusche 26 besitzt in ihrem Boden zwei Durchgangsbohrungen, die mit den Durchgangsbohrungen 16 und 17 des Aufnahmeeinsatzes 14 fluchten und der Zuführung von Warm- bzw. Kaltwasser in die Steuerkartusche 26 dienen, sowie eine weitere Durchgangsbohrung, über welche das Mischwasser aus der Steuerkartusche 26 wieder austritt. Diese Durchgangsbohrung der Steuerkartusche 26 fluchtet in montiertem Zustand mit der Durchgangsbohrung 18 im Aufnahmeeinsatz 14, die ihrerseits so orientiert ist, daß das die Durchgangsbohrung 18 durchströmende Mischwasser in die Vertiefung 12 des Gehäuses 2 gelangt.

Das Mischwasser fließt dabei durch eine Mengendrossel 27, die in der Durchgangsbohrung 18 des Aufnahmeeinsatzes 14 befestigt ist. Die Mengendrossel 27 ist so ausgestaltet, daß sie die Strömungsmenge pro Zeiteinheit auf einen Maximalwert beschränkt, der auch bei einer Drucksteigerung nicht mehr überschritten werden kann.

Die Steuerkartusche 26 wird in dem Innenraum 25 des Aufnahmeeinsatzes 14 durch ein Schraubteil 28 gehalten, das mit seinem unteren Bereich von oben her in den Innenraum 25 des Aufnahmeeinsatzes 14 hineinragt, dort gegen die Mantelfläche des Innenraumes 25 abgedichtet ist und mit seinem unteren Rand gegen einen Umfangsflansch 29 der Steuerkartusche 26 anliegt. Das Schraubteil 28 besitzt die grobe Form einer Glocke, die an ihrem oberen Ende mit einer großflächigen Durchgangsbohrung 30 versehen ist. An einem in einer gewissen Entfernung vom unteren, den Flansch 29 der Steuerkartusche 26 beaufschlagenden Rand entfernten Ringbund 30 befindet sich ein Außengewinde 31, welches mit einem Gewinde 33 in dem oberen Endbereich der Mantelfläche des Innenraumes 10 des Hauptteiles 2a des Gehäuses 2 zusammenwirkt. Die Anordnung ist so, daß beim Einschrauben des Außengewindes 32 des Schraubteiles 28 in das Gewinde 33 des Gehäuses 2 der Schraubteil 28 die Steuerkartusche 26 nach unten in Anlage gegen die Bodenfläche des Innenraumes 25 des Aufnahmeeinsatzes 14 drückt und dabei dort vorgesehene Dichtungen komprimiert, die für eine dichte Überleitung der Wasserströme zwischen den Bohrungen 16, 17, 18 des Aufnahmeeinsatzes 14 und den hiermit fluchtenden Bohrungen im Boden der Steuerkartusche 26 sicherstellen.

In den von dem glockenförmigen Schraubteil 28 umgebenen Innenraum ragt von unten der Steuerhebel 34 der Steuerkartusche 26. Dieser kann in bekannter Weise um eine senkrecht zur Achse der Steuerkartusche 26 verlaufende Achse verschwenkt werden, um die Menge des aus der Steuerkartusche 26 auslaufenden Mischwassers zu verändern, und um eine parallel zur Achse der Steuerkartusche 26 verlaufende Achse verdreht werden, um das Mischungsverhältnis von Kalt- und Warmwasser und damit die Temperatur des ausfließenden Mischwassers einzustellen.

Beim Einsatz in herkömmlichen Sanitärarmaturen wird deren Bedienungshebel direkt auf den Steuerhebel 34 formschlüssig aufgesetzt. Im vorliegenden Falle dagegen ist an dem Steuerhebel 34 ein Mitnahmeteil 35 befestigt, das an seinem oberen, kreisbogenförmigen Rand eine Verzahnung 36 trägt.

Der Bedienungshebel 37, an dem die Hand des Benutzers angreift, ragt bei der dargestellten Wascharmatur im wesentlichen nach oben. Er weist an seinem unteren zugewandten Ende ein kugeliges Lagerteil 38 auf, das in einem Lagerring 39 mittels eines Schwenkzapfens 40 drehbar gelagert ist. Das kugelige Teil 38 liegt dabei mit seiner Außenfläche gleitend an einer komplementärem kugelkalottenförmigen Lagerfläche 41 des Lagerringes 39 an. Der Lagerring 39 seinerseits ist um eine zur Achse des Gehäuses 2 koaxiale Achse drehbar.

In einer Ausnehmung 42 des Lagerteiles 38 ist ein Endbereich eines Schwenkgliedes 63 aufgenommen, das am unteren Rand seines aus dem Lagerteil 38 herausragenden Bereichs ein kreisbogenförmige Verzahnung 44 trägt. Die Verzahnung 44 kämmt mit der Verzahnung 36 an dem mit dem Steuerhebel 34 der Kartusche 26 verbundenen Mitnahmeteil 35.

Der Lagerring 41 erweitert sich von dem oberen, zylindrischen Bereich, in welchem der Bedienungsgriff 37 gelagert ist, nach unten zu einer hohlzylindrischen Schürze 45, die an ihrer Innenmantelfläche formschlüssig in Eingriff mit einem Drehteil 46 der Steuerkartusche 26 steht. In Figuren 1 und 2 ist der nach oben aus dem Gehäuse der Steuerkartusche 26 herausstehende Bereich dieses Drehteiles 46 erkennbar. Im innenliegenden Bereich steht dieses Drehteil 46, in dem auch der Steuerhebel 34 verschwenkbar gelagert ist und das um die Achse der Steuerkartusche 26 verdrehbar ist, drehschlüssig mit der beweglichen Steuerscheibe der Steuerkartusche 26 in Verbindung.

Auf den oberen Rand des Hauptteiles 2a des Gehäuses 2 ist der Zwischenring 47 aufgelegt, wobei erneut ein Stift 48, der in Sackbohrungen des Hauptteiles 2a und des Zwischenringes 47 eingelegt ist, für die richtige Drehorientierung sorgt. Auf die obere Stirnfläche des Zwischenringes 47 wiederum ist eine von oben gesehen konvexe, verhältnismäßig große Auslaufschale 49 aufgelegt. Die Auslaufschale 49 wird von einer kreisrunden Öffnung 50 durchsetzt, die sich im äußeren Bereich konisch erweitert.

Das Schraubteil 28 besitzt an seinem von der Steuerkartusche 26 abgewandten Ende ein Außengewinde 51, auf welches ein Befestigungsring 52 mit einem Innengewinde 64 aufgedreht ist. Der Befestigungsring 52 weist eine Umfangsfläche 53 auf, die komplementär zur konischen Wandung der Durchgangsbohrung 50 der Auslaufschale 49 geneigt ist. Auf diese Weise drückt der Befestigungsring 52 die Auslaufschale 49 gegen die obere Stirnfläche des Zwischenringes 47. Die Umfangsfläche 53 des Befestigungsringes 52 ist mit einer Vielzahl von nutenartigen Öffnungen versehen, die zusammen eine allerdings unterbrochene ringförmige Durchströmungsöffnung 62 bilden.

Zwischen dem oberen Randbereich des Befestigungsringes 52 und einem Klemmring 54 ist der innere Rand einer ringförmigen Membran 55 eingeklemmt. Der Klemmring 54 weist hierzu eine hohlzylindrische, sich in axialer Richtung erstreckende Nabe 56 auf, die ein Außengewinde 57 trägt. Dieses ist mit einem Innengewinde 58 des Befestigungsringes verschraubt.

Über die obere Stirnfläche des Klemmringes 54 schließlich ist eine flache, ringförmige Blende 59 geklipst.

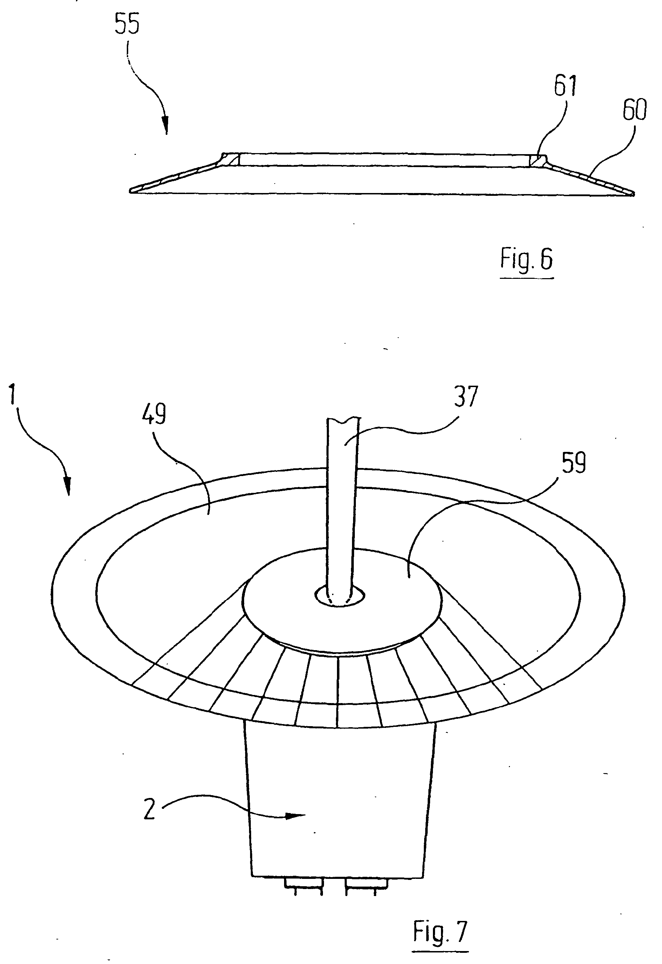

Die Membran 55 ist in Figur 6 herausgezeichnet. Sie umfasst einen verhältnismaßig dünnen, flexiblen, sich in der Einbaulage auf die Auslaufschale 49 zu konisch erweiternden Bereich 60, der von einem am radial innenliegenden Rand befindlichen Klemmwulst 61 ausgeht. Der radial äußere Rand der Membran 55 liegt bei geschlossener Steuerkartusche 26, wie dies in den Figuren 1 und 2 dargestellt ist, an der oberen Fläche der Auslauf schale 49 an.

Die Funktion der oben beschriebenen Waschtischarmatur 1 ist folgende:

Zunächst sei angenommen, daß sich die bewegliche Steuerscheibe innerhalb der Steuerkartusche 26 in ihrer Schließstellung befindet, in welcher also der Durchfluß sowohl von Kalt- als auch von Warmwasser unterbunden ist. Das Kalt- und Warmwasser stehen in den fluchtenden Durchgangsbohrungen 5, 6 des Gehäuses 2, den Durchgangsbohrungen 16 und 17 des Aufnahmeeinsatzes 14 und den nicht dargestellten Durchgangsbohrungen im Boden der Steuerkartusche 26 und beaufschlagen die Unterseite der beweglichen Steuerscheibe.

Soll nun ein Wasserfluß eingeleitet werden, so schwenkt der Benutzer den Bedienungshebel 37 in der Sicht der Figur 1 gegen den Uhrzeigersinn nach oben. Dies hat zur Folge, daß das mit dem Bedienungshebel 37 über das kugelförmige Lagerteil 38 verbundene Schwenkglied 63 ebenfalls gegen den Uhrzeigersinn verschwenkt. Diese Bewegung wird über die miteinander in Eingriff stehenden Verzahnungen 44 und 36 auf den Steuerhebel 35 der Steuerkartusche 26 übertragen. Dieser schwenkt in der Sicht der Figur 1 im Uhrzeigersinn nach unten und verschiebt mit seinem unteren, im Inneren des Gehäuses der Steuerkartusche 26 befindlichen Ende die bewegliche Steuerscheibe so, daß ein Wasserfluß durch die Steuerkartusche 26 in Gang kommt. In welchem Mischungsverhältnis Kalt- und Warmwasser an dem aus der Steuerkartusche 26 austretenden Mischwasser enthalten sind, wird durch die Drehstellung des Drehteiles 46 der Steuerkartusche 26 bestimmt, die ihrerseits wieder durch Verdrehen des Lagerringes 39 um dessen Achse verstellt werden kann. Auch diese Verdrehung des Lagerringes 39 wird über den Bedienungshebel 37 bewerkstelligt, der also grundsätzlich in derselben Weise zu betätigen ist, wie dies bei konventionellen Einhebelmischern der Fall ist.

Das die Steuerkartusche 26 verlassende Mischwasser durchströmt zunächst die Mengendrossel 27, die dafür sorgt, daß nur eine bestimmte Maximalmenge an Wasser pro Zeiteinheit durchströmen kann. Das Mischwasser fließt von der Mengendrossel 27 weiter durch die Durchgangsbohrung 18 im Boden 15 des Aufnahmeeinsatzes 14, von dort in die Vertiefung 12 im Boden 11 des Gehäuses 2 und verteilt sich in dieser in Umfangsrichtung. Aus der Vertiefung 12 fließt das Wasser weiter über den ringförmigen Strömungsraum 24 zwischen der Innenmantelfläche des Gehäuses 2 und der Außenmantelfläche 21 des Aufnahmeeinsatzes 14, durch Ausnehmungen in dem Ringbund 31 des Schraubteiles 28 hindurch bis zum Befestigungsring 52. Es passiert dann die nutenartigen Ausnehmungen an der Umfangsfläche 53 des Befestigungsringes 52 entlang des Spalts zwischen Befestigungsring 52 und Durchgangsbohrung 50 der Auslaufschale 49 und gelangt so in den Raum unterhalb der Membran 55. Die Membran 55 wird nunmehr durch den Wasserdruck nach oben abgehoben, so daß das Wasser zur oberen Fläche der Auslaufschale 49 austreten kann. Von dort strömt es großflächig in einem Strahlbild ab, wie dieses schematisch in Figur 7 dargestellt ist, und fällt vom unteren Randbereich der Auslaufschale 49 in einer Art Vorhang nach unten ab. Die Mengendrossel 27 in der Durchgangsbohrung 18 des Aufnahmeeinsatzes 14 sorgt dafür, daß Druckschwankungen in der Hausleitung das Strahlbild nicht mehr verändern, wenn einmal die maximale, durch die Mengendrossel 27 vorgegebene Literleistung der Waschtischarmatur 1 erreicht ist.

Wird der Wasserfluß durch die Steuerkartusche 26 durch gegensinniges Verschwenken des Bedienungshebels 37 wieder abgestellt, so wird der äußere Rand der Membran 55 durch die elastischen Kräfte der Membran 55 wieder in die in den Figuren 1 und 2 dargestellte Position zurückgeführt, in welcher er an der oberen Fläche der Auslaufschale 49 anliegt. In dieser Position verhindert die Membran 55, daß von oben her Wasser, insbesondere Schmutzwasser, ins Innere der Waschtischarmatur 1 eindringen kann.

## Patentansprüche

1. Sanitäre Auslaufarmatur mit
a) einem Armaturengehäuse (2) mit mindestens einem Zulauf (5, 6) für Wasser;
b) einem Auslauf (49);
c) einer im Inneren des Armaturengehäuses unterebrachten Steuerkartusche (26), der das über den Zulauf (5, 6) des Armaturengehäuses (2) zuströmende Wasser zugeführt wird und die dessen Weiterströmen zum Auslauf (49) entsprechend der Position eines Steuerhebels (37) kontrolliert;
wobei
d) die Steuerkartusche (26) an ihrer Unterseite mindestens eine Zulauföffnung und eine Auslauföffnung für Wasser aufweist,
e) die Steuerkartusche (26) im Inneren eines Aufnahmeeinsatzes (14) angeordnet ist, der
mindestens eine Durchgangsbohrung (16, 17) aufweist, welche an einem Ende mit dem mindestens einen Zulauf (5, 6) des Armaturengehäuses (2) und an dem anderen Ende mit der mindestens einen Zulauföffnung der Steuerkartusche (26) kommuniziert; und
f) zwischen der Mantelfläche (21) des Aufnahmeeinsatzes (14) und der Mantelfläche des Innenraumes (10) des Armaturengehäuses (2) ein Durchströmungsraum (24) vorgesehen ist, über den das Wasser nach oben zum Auslauf (49) strömen kann,
**dadurch gekennzeichnet, daß** der Aufnahmeeinsatz eine weitere Durchgangsöffnung (18) aufweist, die an ihrem einen Ende mit der Auslauföffnung der Steuerkartusche (26) und an ihrem anderen Ende mit einem zwischen dem Aufnahmeeinsatz (14) und dem Armaturengehäuse (2) vorgesehenen Wasserverteilraum (12) kommuniziert, der seinerseits zum radial außen liegenden Bereich des Innenraumes (10) des Armaturengehäuses (2) führt.

2. Sanitäre Auslaufarmatur nach Anspruch 1, **dadurch gekennzeichnet, daß** sie als Einhebelmischer ausgebildet ist.

3. Sanitärarmatur nach Anspruch 1 oder 2, **dadurch gekennzeichnet, daß** zwischen der Mantelfläche (21) des Aufnahmeeinsatzes (14) und der Mantelfläche des Innenraumes (10) des Armaturengehäuses (2) ein Distanzring (23) vorgesehen ist, der den Aufnahmeeinsatz (14) positioniert und Ausnehmungen aufweist, die vom Wasser durchströmt werden können.

4. Sanitäre Auslaufarmatur nach einem der Ansprüche 1 bis 3, **dadurch gekennzeichnet, daß** in der mit der Auslauföffnung der Steuerkartusche (26) kommunizierenden Durchgangsbohrung (18) des Aufnahmeeinsatzes (14) eine Drossel (27) angeordnet ist, welche die Menge des pro Zeiteinheit durchströmenden Wassers auf einen Maximalwert begrenzt.

5. Sanitärarmatur nach einem der vorhergehenden Ansprüche, **dadurch gekennzeichnet, daß** der Auslauf (49) die Form einer Schale besitzt, die auf der Oberseite der sanitären Auslaufarmatur angeordnet ist.

6. Sanitäre Auslaufarmatur nach Anspruch 5, **dadurch gekennzeichnet, daß** die Schale (49) so geneigt ist, daß das Wasser bevorzugt über einen begrenzten Winkelbereich ihres Randes abläuft.

7. Sanitäre Auslaufarmatur nach Anspruch 5 oder 6, **dadurch gekennzeichnet, daß** die Schale (49) eine Durchströmungsöffnung (62) aufweist, durch welche das Wasser von unten auf die Oberseite der Schale (49) fließt.

8. Sanitäre Auslaufarmatur nach Anspruch 7, **dadurch gekennzeichnet, daß** sich durch die Schale (49) ein Betätigungsmechanismus (38, 63) für die Steuerkartusche (26) hindurch erstreckt und der Bedienungshebel (37) nach oben aus der Schale (49) herausragt.

## Revendications

1. Robinet de distribution sanitaire comprenant
a) un corps de robinet (2) doté d'au moins une arrivée (5, 6) pour l'eau ;
b) un dispositif d'écoulement (49) ;
c) une cartouche de commande (26) logée à l'intérieur du corps de robinet, qu'alimente l'eau arrivant par l'arrivée (5, 6) du corps de robinet (2) et qui contrôle la circulation de l'eau en direction du dispositif d'écoulement (49) en fonction de la position d'un levier de commande (37) ;
sachant que
d) la cartouche de commande (26) présente sur son dessous au moins un orifice d'entrée et un orifice de sortie pour l'eau,
e) la cartouche de commande (26) est placée à l'intérieur d'un insert de réception (14) qui présente au moins un perçage de passage (16, 17) communiquant à une extrémité avec ladite au moins une arrivée d'eau (5, 6) du corps de robinet (2) et à l'autre extrémité avec ledit au moins un orifice d'entrée de la cartouche de commande (26), et
f) entre la surface latérale (21) de l'insert de réception (14) et la surface latérale de la cavité (10) du corps de robinet (2) est prévu un espace de circulation traversante (24) permettant à l'eau de circuler vers le haut en direction du dispositif d'écoulement (49),
**caractérisé en ce que** l'insert de réception comporte un orifice ou perçage de passage supplémentaire (18) dont l'une des extrémités communique avec l'orifice de sortie de la cartouche de commande (26) et l'autre extrémité avec un espace de distribution d'eau (12) prévu entre l'insert de réception (14) et le corps de robinet (2), lequel espace de distribution mène quant à lui à la zone de la cavité (10) du corps de robinet (2) qui est située à l'extérieur dans la direction radiale.

2. Robinet de distribution sanitaire selon la revendication 1, **caractérisé en ce qu'**il est réalisé en tant que mitigeur à levier.

3. Robinet de distribution sanitaire selon la revendication 1 ou 2, **caractérisé en ce qu'**entre la surface latérale (21) de l'insert de réception (14) et la surface latérale de la cavité (10) du corps de robinet (2) est prévue une bague d'écartement (23) qui positionne l'insert de réception (14) et présente des évidements pouvant être traversés par l'eau.

4. Robinet de distribution sanitaire selon l'une des revendications 1 à 3, **caractérisé en ce que** dans le perçage de passage (18) de l'insert de réception (14) qui communique avec l'orifice de sortie de la cartouche de commande (26) est prévu un étranglement (27) qui limite la quantité d'eau le traversant par unité de temps à une valeur maximale.

5. Robinet de distribution sanitaire selon l'une des revendications précédentes, **caractérisé en ce que** le dispositif d'écoulement (49) a la forme d'une coque qui est située sur le dessus du robinet d'écoulement sanitaire.

6. Robinet de distribution sanitaire selon la revendication 5, **caractérisé en ce que** la coque (49) présente une inclinaison telle que l'eau s'écoule de préférence par une zone angulaire limitée de son bord.

7. Robinet de distribution sanitaire selon la revendication 5 ou 6, **caractérisé en ce que** la coque (49) présente un orifice de passage (62) à travers lequel l'eau s'écoule à partir du bas par le dessus de la coque (49).

8. Robinet de distribution sanitaire selon la revendication 7, **caractérisé en ce qu'**un mécanisme d'actionnement (38, 63) pour la cartouche de commande (26) traverse la coque (49), et **en ce que** le levier de commande (37) fait saillie de la coque (49) et pointe vers le haut.

## Claims

1. Sanitary outlet fitting having
a) a fitting housing (2) with at least one inlet (5, 6) for water;
b) an outlet (49);
c) a control cartridge (26), which is accommodated in the inside of the fitting housing, is supplied with the water flowing in via the inlet (5, 6) of the fitting housing (2) and controls the onward flow of this water to the outlet (49) according to the position of a control lever (37);
d) the control cartridge (26) having at its underside at least one inlet opening and one outlet opening for water,
e) the control cartridge (26) is arranged in the inside of a receiving insert (14), which
has at least one through-bore (16, 17), which at one end communicates with the at least one inlet (5, 6) of the fitting housing (2) and at the other end communicates with the at least one inlet opening of the control cartridge (26);
and
f) there being provided between the circumferential surface (21) of the receiving insert (14) and the circumferential surface of the interior (10) of the fitting housing (2) a throughflow space (24), via which the water can flow upwards to the outlet (49),
**characterised in that** the receiving insert
has a further through-opening (18), which at its one end communicates with the outlet opening of the control cartridge (26) and at its other end communicates with a water-distributing space (12), which is provided between the receiving insert (14) and the fitting housing (2) and for its part leads to the radially outer region of the interior (10) of the fitting housing (2).

2. Sanitary outlet fitting according to Claim 1, **characterised in that** it is designed as a single-lever mixer.

3. Sanitary fitting according to Claim 1 or 2, **characterised in that** there is provided between the circumferential surface (21) of the receiving insert (14) and the circumferential surface of the interior (10) of the fitting housing (2) a spacer ring (23), which positions the receiving insert (14) and has recesses through which the water can flow.

4. Sanitary outlet fitting according to one of Claims 1 to 3, **characterised in that** there is arranged in the through-bore (18), communicating with the outlet opening of the control cartridge (26), of the receiving insert (14) a restrictor (27) which limits the quantity of water flowing through per unit time to a maximum value.

5. Sanitary fitting according to one of the preceding claims, **characterised in that** the outlet (49) has the shape of a dish, which is arranged on the upper side of the sanitary outlet fitting.

6. Sanitary outlet fitting according to Claim 5, **characterised in that** the dish (49) is inclined in such a way that the water preferably runs off over a limited angular region of its edge.

7. Sanitary outlet fitting according to Claim 5 or 6, **characterised in that** the dish (49) has a throughflow opening (62), through which the water flows from below onto the upper side of the dish (49).

8. Sanitary outlet fitting according to Claim 7, **characterised in that** an actuating mechanism (38, 63) for the control cartridge (26) extends through the dish (49), and the operating lever (37) projects upwards out of the dish (49).
